# EUROPEAN PATENT SPECIFICATION

(11) **EP 1 874 699 B1**
(45) Date of publication and mention of the grant of the patent: **05.12.2018**
(21) Application number: 06754892.5
(22) Date of filing: 27.04.2006
(51) Int. Cl.: C03C 23/00, C03B 23/00, C03B 32/00, C03C 3/06, C03B 23/20

(54) **METHOD FOR THE REGENERATION OF A WORN QUARTZ GLASS JIG**
VERFAHREN ZUR REGENERIERUNG EINER ABGENUTZTEN QUARZGLASVORRICHTUNG
PROCEDE DE REGENERATION D'UN GABARIT DE VERRE QUARTZEUX USE

(30) Priority: 28.04.2005 JP 2005132925
(43) Date of publication of application: 09.01.2008
(73) Proprietor: Heraeus Quarzglas GmbH & Co. KG, 63450 Hanau (DE); SHIN-ETSU QUARTZ PRODUCTS CO., LTD., Shinjuku-ku, Tokyo 160-0023 (JP)
(72) Inventor: SATO, Tatsuhiro, Koriyama-shi Fukushima, 963-0101 (JP); FUJINOKI, Akira, Fukushima, 963-0701 (JP); ARAKI, Itsuo, Kumamoto, 861-1305 (JP)
(74) Representative: Staudt, Armin Walter
(86) International application number: PCT/EP2006/061882
(87) International publication number: WO 2006/114440

(56) References cited:
- EP-A- 1 386 890
- EP-A- 1 471 039
- US-A1- 2005 272 588
- PATENT ABSTRACTS OF JAPAN vol. 1997, no. 12, 25 December 1997 (1997-12-25) -& JP 09 202630 A (FUKUI SHINETSU SEKIEI:KK; SHINETSU QUARTZ PROD CO LTD), 5 August 1997 (1997-08-05)
- PATENT ABSTRACTS OF JAPAN vol. 2003, no. 12, 5 December 2003 (2003-12-05) -& JP 2005 067997 A (KOUSHIN SPECIAL GLASS CO LTD), 17 March 2005 (2005-03-17) cited in the application
- PATENT ABSTRACTS OF JAPAN vol. 1995, no. 10, 30 November 1995 (1995-11-30) & JP 07 183240 A (TOSHIBA CERAMICS CO LTD), 21 July 1995 (1995-07-21)

## Description

The invention concerns a method for the regeneration of a worn jig made of quartz glass (quartz glass jig) which is used in the semiconductor production process for example.

Conventionally, semiconductor devices such as MOSLSI and bipolar LSI have generally been produced by way of in excess of 500 processes such as oxidation processes, CVD processes and etching processes for example. A great number of semiconductor production devices are required for each process and quartz glass jigs are incorporated into these semiconductor production devices. Furthermore, these quartz glass jigs are dealt with as consumables and slight levels of damage are repaired in use, but those which have been consumed are scrapped and disposed of. Furthermore, more recently doped quartz glass jigs have come to be used in the etching processes in particular and the frequency of repair and regeneration has increased.

A method involving refusing and eliminating impurities with a flame treatment has been disclosed in Patent Citation 1 as a method for the regeneration of quartz glass jigs which have been used in a semiconductor production process.

Japanese Unexamined Patent Application Laid Open 2005-67997.

A further method for treating a used quartz glass jig is known from JP 09-202630 A. A first physical method step, such as sandblasting, is used to remove impurities and microcracks generated during the production of semiconductor wafers, followed by an etching step with hydrofluoric acid or ammonium fluoride. Thereafter a hot flame treatment smoothens the surface of the quartz glass jig. A further cleaning step is disclosed using hydrogen peroxide as a cleaning liquid.

Patent document EP 1 471 039 A1 discloses a method for producing a quartz glass jig to be used in semiconductor industries. The quartz glass jig has an improved surface layer cleanliness after subjecting it to a multiphase cleaning step in a gaseous atmosphere containing a halogen element at high temperatures in the range of 800°C to 1300°C. The multiphase cleaning step is carried out after an annealing for stress removal.

### Problems to be solved by the Invention

However, the problems outlined below are associated with the regeneration technique for quartz glass jigs and doped quartz glass jigs which have been used in the past.

The impurities which are attached to the quartz glass jigs in the semiconductor production process are not only present on the surface but also permeate into the fine cracks which are produced from the surface so that they are also present to a depth of at least 1 µm from the surface. The impurities which have permeated into these cracks are difficult to remove by means of ordinary cleaning and if the quartz glass jigs are repaired as they are with residual impurities using a flame treatment the cracks are closed and the impurities remain within the quartz glass forming foreign bodies or bubbles. Furthermore, Na, K, Cu and the like among the abovementioned impurities which have a high diffusion rate into quartz glass are thermally diffused into the whole of the thickness direction of the quartz glass, and those which have a somewhat lower diffusion rate, such as Fe for example, are thermally diffused to a few tens of µ from the surface.

Furthermore, the thickening of thin parts with fillets and welding are carried out by means of a flame process and a strain relieving anneal in the regeneration of quartz glass jigs and impurity contamination is produced. The working processes in which flames are used and the strain relieving anneal are essential parts of the repair process and the situation is such that the process contamination due to these processes cannot be avoided.

The present invention is based upon an understanding of these problems and it is intended to provide a technique for the regeneration of quartz glass jigs and doped quartz glass jigs with which, after removing completely the impurity attached to the surface and the impurity which has diffused into the jigs from quartz glass jigs which have been used in a semiconductor production process, working repairs are carried out and the contamination resulting from the working processes is also removed.

### Means of solving these problems

In order to resolve the abovementioned problems, the method for the regeneration of quartz a glass jig of this invention is including a purification treatment, a repairing process and a cleaning treatment, whereby during the purification treatment the worn quartz glass jig is subjected to a gaseous atmosphere containing a halogen element at a temperature above a predetermined temperature, and during the repairing process worn parts of the quartz glass jig are repaired, and during the cleaning treatment the repaired quartz glass jig is cleaned, whereby the repairing process involves using doped quartz glass material for coating or welding, and whereby at least one of the following treatments: fillet welding, an attachment of a pre-shaped glass sheet, a coating, a flame spray coating is performed, each followed by a strain relieving annealing treatment by using a flame process.

Further embodiments according to the invention are covered by the dependent claims.

### Effect of the Invention

By means of the present invention it is possible to reuse worn out quartz glass jigs which have been used by semiconductor manufacturers as regenerated quartz glass jig products of high quality of which the impurity content is small by carrying out a high temperature halogen-containing gaseous atmosphere treatment.

### Optimum embodiments of the Invention

Embodiments of the invention are described below, but these are given as typical examples and of course various modifications can be applied provided that the technical concept of the invention is not exceeded.

The invention provides a method for the regeneration of a quartz glass jig which is characterized in that quartz glass jigs which have been used in a semiconductor production process can be subjected to a regenerating treatment with which impurities are removed by means of a heating purification treatment at a temperature above a prescribed temperature in a halogen-containing gaseous atmosphere and re-supplied to the user.

No particular limitation is imposed upon the aforementioned halogen-containing gaseous atmosphere provided that it is a gaseous atmosphere which contains a halogen element, and examples include HCl, HF, Cl₂, thionyl chloride and gaseous mixtures thereof, but HCl is preferred. This is because HCI gas is a stable gas which is effective for removing most metal impurities which is able to remove effectively, for example, Na, K, Li, Fe, Al, Ni, Cr, Cu and the like. A halogen-containing gaseous atmosphere is very effective for removing metal impurities which form low boiling point halides by means of a chemical reaction, such as Fe, Al, Ni, Cr and the like, in particular. The preferred treatment conditions for the aforementioned purification involve maintaining a temperature in the region of 400°C to 1300°C for from 1 minute to 400 hours.

The execution of a process involving cleaning with a cleaning liquid and a process in which material attached to the surface is removed by burning, corresponding to the degree of contamination of the jigs which are subjected to the regeneration treatment, are preferably carried out in addition to the aforementioned heat treatment in a halogen-containing gaseous atmosphere in the aforementioned purification treatment process. Just one of these supplementary processes may be carried out, or a combination of two or more such processes may be carried out. No particular limitation is imposed upon the order of the various processes in the purification treatment process.
The preferred heat treatment conditions involve maintaining a heating temperature within the range from 100°C to 1300°C for from 1 minute to 400 hours.
No particular limitation is imposed upon the aforementioned cleaning liquid, but hydrofluoric acid and ultra-pure water are preferred. The cleaning treatment with hydrofluoric acid and the like is carried out since it removes material which is attached to the surface and also opens up the very small cracks in the surface of the quartz glass jigs and readily removes impurities which have invaded these cracks.

The depth of the part of the quartz glass which is etched on cleaning with hydrofluoric acid and the like is preferably in the range of from 1 µm to 100 µm from the surface. This is because the depth to which the surface cracks penetrate is at the most from some 1 to 10 µm and if the cracks are opened up to at least this depth then impurity removal is carried out very effectively. Furthermore, it is also because the depth of contamination to which the impurities in the semiconductor production processes and the repair working contamination with the metal impurities which are slow to diffuse is at the most a depth of 100 µm.

The aforementioned process in which material attached to the surface is burned off and removed with a flame has the best removal efficiency and is preferred in the case of organic impurities.

Both natural quartz glass jigs and synthetic quartz glass jigs can be used as the quartz glass jig with which the aforementioned regeneration treatment is carried out. Furthermore, it can also be applied to a doped quartz glass jig which has been doped with metal elements and the like.

In this invention the inclusion after the aforementioned purification treatment process of a repairing process in which parts of the quartz glass jig which have been worn out in the semiconductor production process are repaired and a final cleaning treatment is desirable.

No particular limitation is imposed upon the aforementioned method of repair and, for example 1. fillet welding repairs with a flame working treatment, 2. the attachment of thin moulds, 3. coating (application methods) and 4. flame coating methods can be used. In practical terms, for example, the techniques described in "Ceramic Coating" edited by Hiromi Takeda and published by the Nikkan Kogyo Shinbunsha and in "Fundamentals of Thin Film Formation", written by Tachio Asamaki and published by the Nikkan Kogyo Shinbunsha Co. can be used.

If in those cases where the aforementioned flame working treatment is carried out the impurities are not removed beforehand by means of the aforementioned purification treatment process then foreign bodies and bubbles may be formed in the vicinity of the surface and the contamination may spread as a result of diffusion and migration of the metal impurities into the inner parts at high temperatures. By carrying out a purification treatment process of this invention it is possible to prevent impurity contamination and the formation of foreign bodies and bubbles to a marked extent. No particular limitation is imposed upon the flame working treatment method and known flame working treatments should be used. A stress relieving annealing treatment is preferably carried out after the flame working treatment.

The aforementioned attachment of a thin mould is a method in which a part of thickness some 1 to 5 mm is prepared beforehand as a thin mould of the part which has been worn away by normal plasma etching, the worn part of the quartz glass jig is ground away and the thin mould is fitted on.

The aforementioned coating and flame coating methods are procedures where a layer of quartz glass material is formed using these methods on the part of the quartz glass jig which has been worn away and then they are ground down to the prescribed shape by means of a grinding operation.

Doped quartz glass material is used in the aforementioned repairing process. In this case, natural quartz glass, synthetic quartz glass which has not been doped or doped quartz glass can be used for the quartz glass jig which is being repaired, but the use of natural or undoped synthetic quartz glass is preferred. By using natural or undoped synthetic quartz glass and arranging doped quartz glass material only in the parts where plasma etching resistance is required in a dry etching process it is possible to obtain doped quartz glass jigs which have excellent plasma resistance at low cost.

The total metal concentration in the aforementioned doped quartz glass material is preferably from 0.1 to 20 wt%. In the case of material which is to be used in a dry etching process in particular there is a need for plasma etching resistance and quartz glass which has the aforementioned doping concentration can provide a 10% to 200% improvement in plasma corrosion resistance.

The metal element included in the aforementioned doped quartz glass materials is preferably of two or more types, the said metal element comprising at least one type of first metal element selected from group 3B of the periodic table and at least one type of second metal element selected from among Mg, Ca, Sb, Ba, Sc, Y, Ti, Zr, Hf, the lanthanides and the actinides. The plasma corrosion resistance is increased further by doping with these metal elements and it can be increased by 20% to 400%.

The aforementioned final cleaning treatment is a process in which the working contamination which has been produced during the aforementioned repairing process is removed. The aforementioned cleaning treatment may be, for example, a process involving heating and purification in a halogen-containing gaseous atmosphere or a cleaning treatment with a cleaning liquid. Any one of these processes or a combination of two or more of these processes is preferably carried out for the aforementioned final cleaning treatment Each process is preferably carried out in the same way as the process involving heating and purification in a halogen-containing gaseous atmosphere or the cleaning treatment with a cleaning liquid described as the aforementioned purification treatment processes.

It is possible to produce regenerated quartz glass jigs with no impurity contamination at all by following through all of the purification treatment process, the repairing process and the final cleaning treatment as described above.

### Illustrative Examples

The invention is described below in more practical terms by means of illustrative examples, but of course these illustrative examples are typical examples and they should not be interpreted as limiting the invention.

### Example 1

A quartz glass tube (diameter 300 mm x length 1500 mm x thickness 6 mm) which had been used by a semiconductor manufacturer to the worn surface of which a brown coloured foreign material was attached was taken and subjected to the treatment outlined below.

The aforementioned tube was immersed in 5% HF solution for 100 hours and then taken out and maintained in a 50% nitrogen and oxygen gas mixture of 5 nine purity at 800°C for 5 hours, then it was maintained at 1200°C for 1 hour in HCI gas of 5 nine purity and then cooled to room temperature and then taken out. (Process a: Purification treatment process)

Subsequently the worn thin part was subjected to a welding repair with flame working and it was then placed in an air atmosphere and maintained at 1100°C for 2 hours and cooled to room temperature as a strain relieving anneal and then taken out. (Process b: Flame working treatment process)

Subsequently it was maintained in HCI gas of 5 nine purity at 1200°C for 1 hour and cooled to room temperature and then taken out, and then it was immersed in 5% HF solution for 100 hours and taken out. (Process c: Final cleaning treatment)

The tube was subjected to surface analysis and bulk analysis after being taken (which is to say before treatment) and after each of the aforementioned treatment processes. The results are shown in Table 1. As shown in Table 1, the tube which had been subjected to the purification treatment maintained a state of very high purity. Moreover, it was a state where no foreign bodies, bubbles or the like were observed at all at the surface or in the vicinity of the surface.

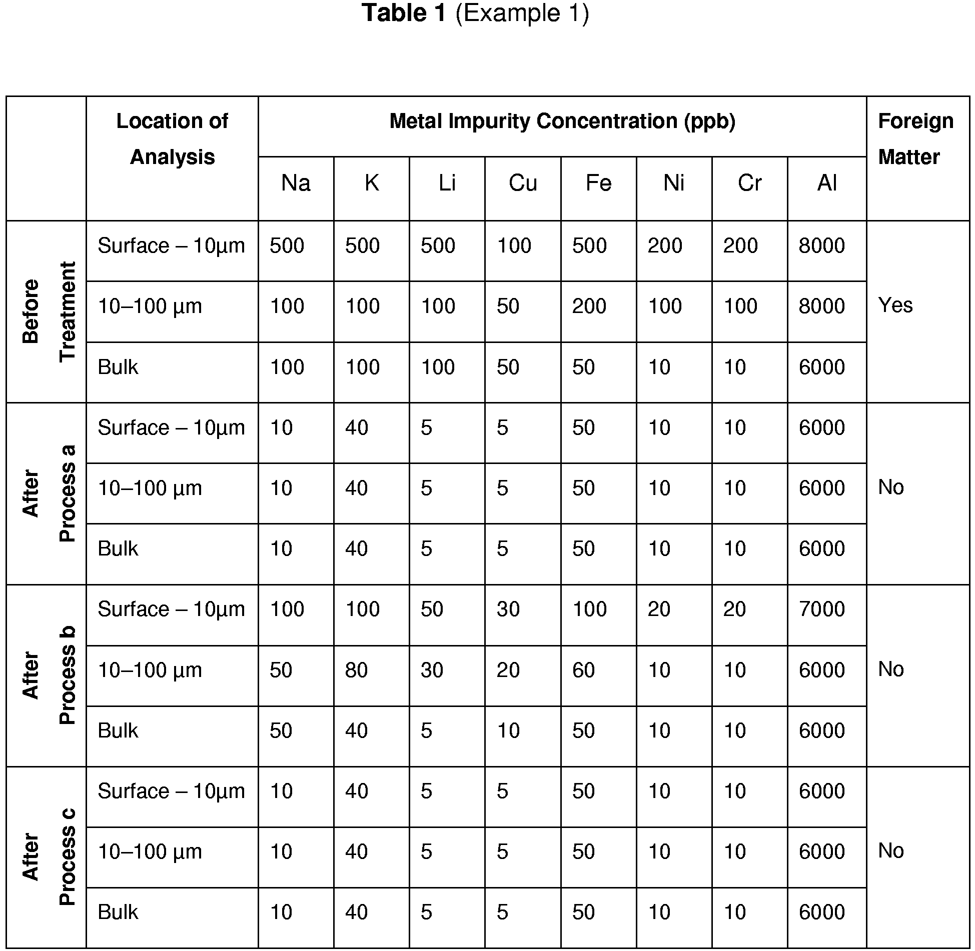

In Table 1 as well as in the following tables the term "Foreign Matter" means and is including: adhered matter, bubbles or foreign bodies in the vicinity of the surface layer.

### Comparative Example 1

A quartz glass tube (diameter 300 mm x length 1500 mm x thickness 6 mm) which had been used by a semiconductor manufacturer to the worn surface of which a brown coloured foreign material was attached was taken and the worn thin part was subjected to a welding repair with flame working and it was then placed in an air atmosphere and maintained at 1100°C for 2 hours and cooled to room temperature as a strain relieving anneal and then taken out. (Process b: Flame working treatment process)

When the tube was subjected to surface analysis and bulk analysis after treatment, very high metal impurity concentrations were confirmed. Furthermore foreign bodies and bubbles were observed at the surface and in the thickness in the vicinity of the surface. The results are shown in Table 2.

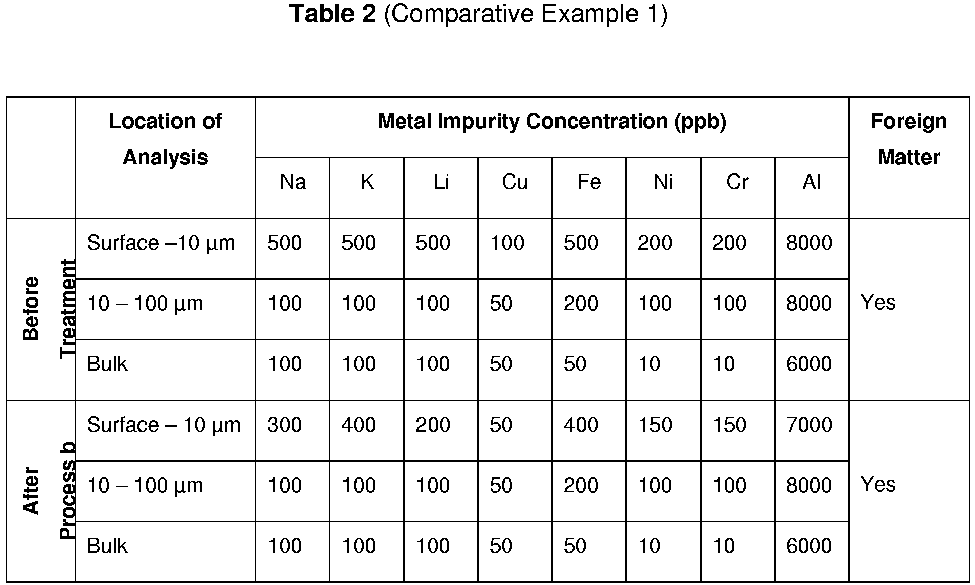

### Example 2

Similar results to those obtained in Example 1 were obtained on carrying out the same experiment as in Example 1 except that the conditions of the HCI gas treatment in the aforementioned purification treatment process and the final cleaning treatment were changed to maintaining at 500°C for 30 hours.

### Example 3

Similar results to those obtained in Example 1 were obtained on carrying out the same experiment as in Example 1 except that the conditions of the HCI gas treatment in the aforementioned purification treatment process and the final cleaning treatment were changed to maintaining at 1250°C for 10 minutes.

### Example 4

Similar results to those obtained in Example 1 were obtained on carrying out the same experiment as in Example 1 except that the conditions of the 50% gaseous mixture of oxygen and nitrogen treatment in the aforementioned purification treatment process were changed to maintaining at 200°C for 300 hours.

### Example 5

Similar results to those obtained in Example 1 were obtained on carrying out the same experiment as in Example 1 except that the conditions of the 50% gaseous mixture of oxygen and nitrogen treatment in the aforementioned purification treatment process were changed to maintaining at 1250°C for 10 minutes.

### Example 6

A worn 0.5 wt% Y and 1.0 wt% Al doped quartz glass ring (external diameter 300 mm x internal diameter 250 mm x thickness 6 mm) which had been used by a semiconductor manufacturer was taken and subjected to the treatment outlined below. The aforementioned ring was immersed in 5% HF solution for 100 hours and then taken out, then maintained in a 50% gaseous mixture of nitrogen and oxygen of 5 nine purity at 300°C for 10 hours, then maintained in HCI gas of 5 nine purity at 1200°C for 1 hour and then it was cooled to room temperature and taken out. Process a: Purification treatment process). Subsequently the worn thin part was fillet repaired using 0.5 wt% Y and 1.0 wt% Al doped quartz glass material with flame working and then placed in an air atmosphere and maintained at 1100°C for 2 hours and cooled to room temperature for a strain relieving anneal and then it was taken out. (Process b: Flame working treatment process)

Subsequently it was maintained in HCI gas of 5.9 purity at 1200°C for 1 hour and cooled to room temperature and taken out, and then it was immersed in 5% HF solution for 100 hours and then taken out. (Process c: Final cleaning treatment).

The ring was subjected to surface analysis and bulk analysis after being taken (which is to say before treatment) and after each of the aforementioned treatment processes. The results are shown in Table 3. As shown in Table 3, the ring which had been subjected to the purification treatment maintained a state of very high purity. Moreover, it was a state where no foreign bodies, bubbles or the like were observed at all at the surface or in the vicinity of the surface.

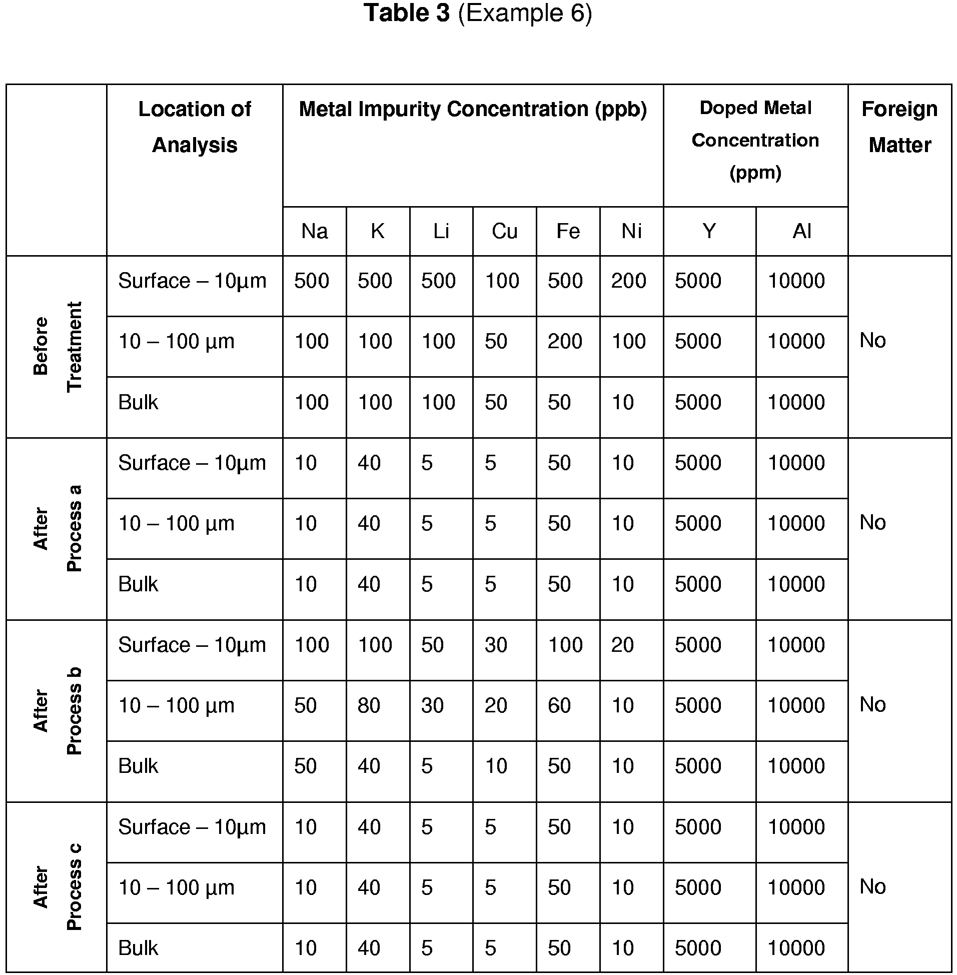

### Example 7

A similar experiment to Example 6 was carried out except that the worn inner diameter of the ring was removed by a grinding process and a process where a thin moulded 0.5 wt% Y 1.0 wt% Al doped quartz glass ring (external diameter 260 mm x internal diameter 250 mm x thickness 3 mm) was attached was carried out instead of the aforementioned flame working treatment process. The results are shown in Table 4.

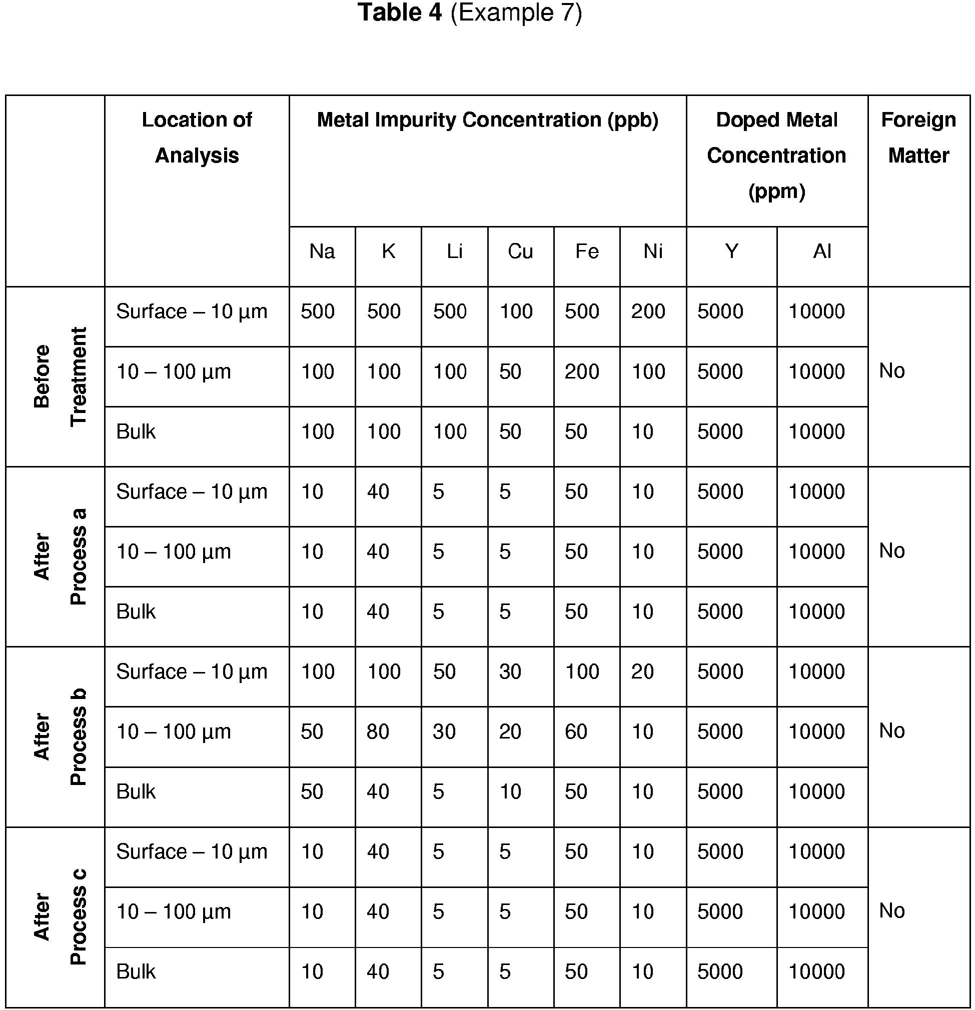

### Example 8

A similar experiment to Example 6 was carried out except that a worn normal natural quartz glass ring (external diameter 300 mm x internal diameter 250 mm x thickness 6 mm) which had been used by a semiconductor manufacturer was used instead of the doped quartz glass ring. The results are shown in Table 5.

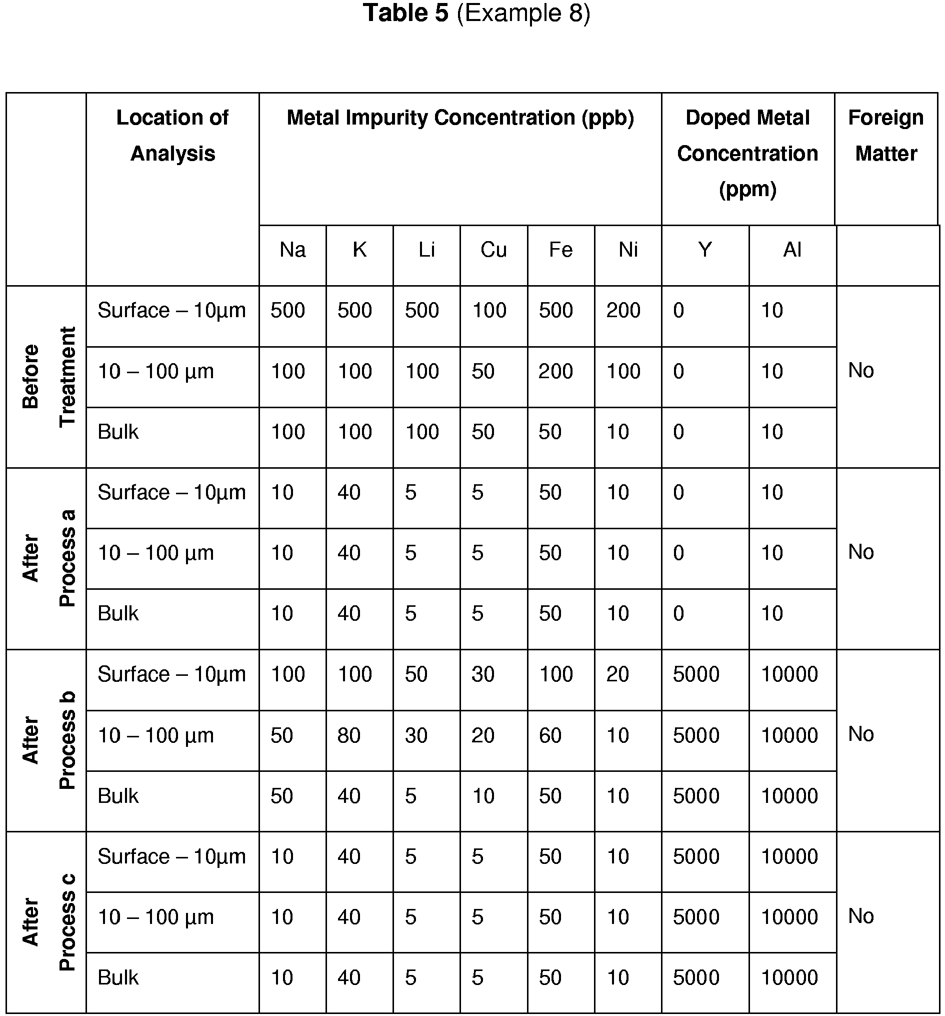

### Comparative Example 2

A worn 0.5 wt% Y and 1.0 wt% Al doped quartz glass ring (external diameter 300 mm x internal diameter 250 mm x thickness 6 mm) which had been used by a semiconductor manufacturer was taken and the part which had worn thin part was subjected to a welding repair using doped quartz glass material of the same concentration with flame working and then placed in an air atmosphere and maintained at 1100°C for 2 hours and cooled to room temperature for a strain relieving anneal and then it was taken out. (Process b: Flame working treatment process)

On subjecting the ring to surface analysis and bulk analysis after treatment, very high metal impurity concentrations were confirmed. Furthermore, foreign bodies and bubbles were observed in the thickness in the vicinity of the surface. The results are shown in Table 6.

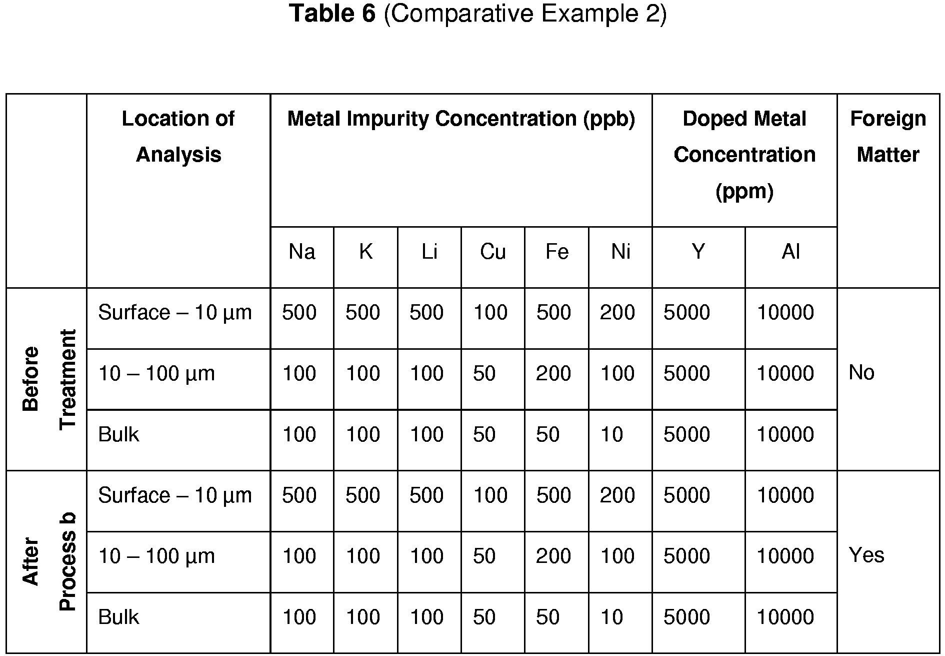

## Claims

1. Method for the regeneration of worn quartz glass jig, including a purification treatment, a repairing process and a cleaning treatment, whereby during the purification treatment the worn quartz glass jig is subjected to a gaseous atmosphere containing a halogen element at a temperature above a predetermined temperature, and during the repairing process worn parts of the quartz glass jig are repaired, and during the cleaning treatment the repaired quartz glass jig is cleaned, whereby the repairing process involves using doped quartz glass material for coating or welding, and whereby at least one of the following treatments: fillet welding, an attachment of a pre-shaped glass sheet, a coating, a flame spray coating is performed, each followed by a strain-relieving annealing treatment by using a flame process.

2. A method according to Claim 1, **characterized in that** from 0.1 to 20 wt% of metal element is included in the doped quartz glass.

3. A method according to Claim 1 or Claim 2, **characterized in that** the metal element included in the doped quartz glass material is of two or more types, comprising a type of first metal element selected from among group 3B of the periodic table and a type of second metal element selected from among Mg, Ca, Sr, Ba, Sc, Y, Ti, Zr, Hf, the lanthanides and the actinides.

4. A method according to any one of Claims 1 to 3, **characterized in that** the cleaning treatment comprises at least one process selected from the group consisting of: heat treatment in a gaseous atmosphere which contains a halogen element, cleaning by using a cleaning liquid.

5. A method according to any of Claims 1 to 4, **characterized in that** the purification treatment comprises at least one process selected from the group consisting of: cleaning by using cleaning liquids, removal of material which is attached on a surface of the jig by burning with a flame.

## Patentansprüche

1. Verfahren zur Regeneration von verschlissenen Quarzglashalterungen, umfassend eine Purifizierungsbehandlung, ein Reparaturverfahren und eine Reinigungsbehandlung, wobei während der Purifizierungsbehandlung die verschlissene Quarzglashalterung einer gasförmigen Atmosphäre ausgesetzt wird, die ein Halogenelement bei einer Temperatur oberhalb einer vorbestimmten Temperatur enthält, und während des Reparaturverfahrens verschlissene Teile der Quarzglashalterung repariert werden, und während der Reinigungsbehandlung die reparierte Quarzglashalterung gereinigt wird, wobei das Reparaturverfahren die Verwendung von dotiertem Quarzglasmaterial zum Beschichten oder Schweißen umfasst, und wobei mindestens eine der folgenden Behandlungen durchgeführt wird: Kehlnahtschweißen, Befestigung einer vorgeformten Glasscheibe, Beschichtung, Flammspritzbeschichtung, jeweils gefolgt von einer spannungsentlastenden Temperbehandlung durch Anwendung eines Flammenverfahren.

2. Verfahren nach Anspruch 1, **dadurch gekennzeichnet, dass** 0,1 bis 20 Gew.-% eines Metallelements in dem dotierten Quarzglas enthalten sind.

3. Verfahren nach Anspruch 1 oder Anspruch 2, **dadurch gekennzeichnet, dass** das in dem dotierten Quarzglasmaterial enthaltene Metallelement zwei oder mehr Typen aufweist, umfassend einen ersten Typ von Metallelement ausgewählt aus der Gruppe 3B des Periodensystems, und einen zweiten Typ von Metallelement, ausgewählt aus Mg, Ca, Sr, Ba, Sc, Y, Ti, Zr, Hf, den Lanthaniden und den Actiniden.

4. Verfahren nach einem der Ansprüche 1 bis 3, **dadurch gekennzeichnet, dass** die Reinigungsbehandlung mindestens ein Verfahren umfasst, ausgewählt aus der Gruppe bestehend aus: Wärmebehandlung in einer gasförmigen Atmosphäre, die ein Halogenelement enthält, Reinigung unter Verwendung einer Reinigungsflüssigkeit.

5. Verfahren nach einem der Ansprüche 1 bis 4, **dadurch gekennzeichnet, dass** die Purifizierungsbehandlung mindestens ein Verfahren umfasst, ausgewählt aus der Gruppe bestehend aus: Reinigen unter Verwendung von Reinigungsflüssigkeiten, Entfernen von Material, das auf einer Oberfläche der Vorrichtung befestigt ist, durch Abbrennen mit einer Flamme.

## Revendications

1. Procédé destiné à la régénération d'un gabarit en verre de quartz usé, incluant un traitement de purification, un processus de réparation et un traitement de nettoyage, attendu que pendant le traitement de purification, le gabarit en verre de quartz usé est soumis à une atmosphère gazeuse contenant un élément halogène à une température au-dessus d'une température prédéterminée, et pendant le processus de réparation, des parties usées du gabarit en verre de quartz sont réparées, et pendant le traitement de nettoyage, le gabarit en verre de quartz est nettoyé, attendu que le processus de réparation implique l'utilisation d'un matériau de verre de quartz dopé pour revêtement ou soudage, et attendu que l'on réalise au moins un des traitements suivants : soudage en cordon, une fixation d'une feuille de verre préformée, un revêtement, un revêtement au pistolet à flamme, chacun de ceux-ci étant suivi d'un traitement de recuit de décharge des contraintes à l'aide d'un processus à flamme.

2. Procédé selon la revendication 1, **caractérisé en ce que** 0,1 % à 20 % en poids d'un élément métallique est inclus dans le verre de quartz dopé.

3. Procédé selon la revendication 1 ou 2, **caractérisé en ce que** l'élément métallique inclus dans le matériau de verre de quartz dopé est de deux ou plus types, comprenant un premier type d'élément métallique sélectionné parmi le groupe 3B du tableau périodique, et un second type d'élément métallique sélectionné parmi Mg, Ca, Sr, Ba, Sc, Y, Ti, Zr, Hf, les lanthanides, et les actinides.

4. Procédé selon l'une quelconque des revendications 1 à 3, **caractérisé en ce que** le traitement de nettoyage comprend au moins un processus sélectionné parmi le groupe consistant en : un traitement thermique sous atmosphère gazeuse, laquelle contient un élément halogène, un nettoyage à l'aide d'un produit liquide.

5. Procédé selon l'une quelconque des revendications 1 à 4, **caractérisé en ce que** le traitement de purification comprend au moins un processus sélectionné parmi le groupe consistant en : un nettoyage à l'aide de produits liquides, l'élimination de matériau fixé sur une surface du gabarit en brûlant avec une flamme.
